Europäisches Patentamt

European Patent Office

Office européen des brevets

(19)

(11) Numéro de publication : **0 056 776**
**B2**

(12) **NOUVEAU FASCICULE DE BREVET EUROPÉEN**

(45) Date de publication du nouveau fascicule du brevet :
27.05.87

(21) Numéro de dépôt : 82420008.3

(22) Date de dépôt : 18.01.82

(51) Int. Cl.⁴ : **B 21 K   1/06**, B 60 B 35/00,
C 21 D   8/10

(54) **Procédé de fabrication d'ébauches d'essieux creux en une seule pièce et ébauches d'essieux obtenues.**

(30) Priorité : 20.01.81 FR 8100976

(43) Date de publication de la demande :
28.07.82 Bulletin 82/30

(45) Mention de la délivrance du brevet :
03.10.84 Bulletin 84/40

(45) Mention de la décision concernant l'opposition :
27.05.87 Bulletin 87/22

(84) Etats contractants désignés :
AT BE DE GB IT LU NL SE

(56) Documents cités :
FR-A- 2 021 335
FR-A- 2 080 696
US-A- 2 133 091
US-A- 2 222 263
US-A- 2 748 039
Houdremont, Handbuch der Sonderstahlkunde (1943)
pages 230, 231
Werkstattechnik - wt - Zeitschrift für industrielle Fertigung (1969) volume 9, pages 439-442
Haemmermaschinen 6.1 - 6.4, prospectus d'Usine de
Wecker, Luxembourg (1970)

(73) Titulaire : **VALLOUREC Société Anonyme dite.**
**7, place du Chancelier Adenauer**
**F-75116 Paris (FR)**

(72) Inventeur : **Delfino, Jean**
**Résidence AFCM Parc du Château de Montmorency**
**F-95160 Montmorency (FR)**
Inventeur : **Prevot, Maurice**
**21, avenue de la Gare**
**F-59440 Avesnes S/Elpe (FR)**

(74) Mandataire : **de Passemar, Bernard**
**VALLOUREC 7 Place du Chancelier Adenauer**
**F-75016 Paris (FR)**

EP 0 056 776 B2

## Description

La présente invention est relative à un procédé de fabrication d'ébauches d'essieux creux en une seule pièce, comportant un corps muni de fusées aux deux extrémités, destinées à l'équipement de véhicules roulants, routiers ou non, notamment des véhicules utilitaires tractés tels que des remorques ou semi-remorques.

Il existe essentiellement deux familles de procédés pour la production d'ébauches d'essieux creux.

Une première famille de procédés permet la fabrication d'ébauches d'essieux composites, c'est-à-dire formées de plusieurs pièces assemblées. On sait ainsi réaliser des ébauches d'essieux par assemblage longitudinal de deux moitiés constituées chacune d'un produit de départ, notamment tôle ou plat, profilés, par exemple, en forme de U à section variable, par emboutissage ou forgeage, les fusées étant pré-réalisées sur le produit de départ. On sait également réaliser des ébauches d'essieux creux par assemblage d'un corps tubulaire sur lequel on rapporte par tous procédés appropriés, notamment par soudure, des fusées fabriquées indépendamment.

La seconde famille de procédés de fabrication d'ébauches d'essieux permet l'obtention d'ébauches d'essieux monoblocs, c'est-à-dire en une seule pièce. On part habituellement d'un tube lisse d'épaisseur de paroi uniforme, de section appropriée, par exemple ronde, ovale, rectangulaire ou carrée que l'on rétreint aux extrémités par forgeage ou martelage pour obtenir la réduction de section correspondant aux fusées, un traitement thermique final portant sur l'ensemble de l'essieu venant parachever le formage à chaud. Le traitement thermique que l'on fait subir à l'ébauche d'essieu dépend des caractéristiques de l'acier utilisé. Selon celui-ci, on fait subir à l'ébauche d'essieu soit une trempe suivie d'un revenu, soit un traitement de normalisation. Le processus de traitement thermique a l'inconvénient d'engendrer sur l'ébauche d'essieu qui est un produit à section variable des déformations nécessitant un dressage ultérieur qui est une source de contraintes résiduelles sur l'essieu fini.

Les essieux obtenus à partir des ébauches d'essieux connues jusqu'à présent présentent l'inconvénient de ne pas présenter en tous points de leur longueur des caractéristiques dimensionnelles et mécaniques en rapport avec les contraintes subies en fonctionnement. Pour assurer une durée de vie suffisante à l'essieu les constructeurs sont donc amenés à surdimensionner les essieux, ou certaines zones particulières de ceux-ci, ce qui accroît le poids de l'essieu et son coût de fabrication.

La présente invention se propose de fournir un procédé pour fabriquer de manière économique des ébauches d'essieux creux en une seule pièce permettant d'obtenir des essieux offrant en particulier des caractéristiques mécaniques adaptées dans les différentes zones de l'essieu aux contraintes subies en service, tout en étant pour de mêmes caractéristiques de fonctionnement d'une épaisseur plus faible au corps pour un diamètre donné par rapport aux essieux conventionnels.

Le procédé selon l'invention se caractérise par le fait qu'après avoir chauffé un tube en acier, on le soumet à une opération de trempe, en particulier à l'eau sur toute sa longueur suivie d'un revenu, on effectue ensuite aux extrémités du tube, après chauffage localisé rapide et sans formation de calamine par exemple par induction desdites zones d'extrémités, des opérations de refoulement pour créer une surépaisseur dans la zone de transition entre le corps et la fusée et de rétreint, après quoi on effectue un traitement thermique localisé de recuit aux deux extrémités de l'ébauche d'essieu.

Dans un premier mode de réalisation, on effectue l'opération de trempe sur des tubes en grande longueur, par exemple, comme enseigné dans la demande de brevet français 79 08 911 (FR-A-24 53 902) de la déposante, après quoi on effectue un revenu du tube en grande longueur et, après lui avoir fait subir un calibrage dimensionnel et un dressage, on le tronçonne à la longueur correspondant à celle désirée pour l'ébauche d'essieu.

Dans un second mode de réalisation, on effectue l'opération de trempe et revenu sur des tubes préalablement tronçonnés à la longueur voulue pour l'ébauche d'essieu.

Selon l'invention, les opérations de forgeage et refoulement et de recuit peuvent se faire dans la même ligne de production à la suite du traitement de trempe et revenu. En variante, on peut prévoir d'effectuer indépendamment le traitement de trempe et revenu et, après avoir éventuellement stocké les tubes trempés et revenus, on les soumet ultérieurement aux étapes suivantes du procédé selon l'invention.

L'acier utilisé selon l'invention est du type acier de construction trempable en particulier à l'eau et soudable.

Les opérations de refoulement et de rétreint permettant de former les fusées et la zone de transition entre celles-ci et le corps sont de préférence réalisées en une seule opération après chauffage local rapide sans formation de calamine par exemple par induction, de la zone d'extrémités correspondante du tube préalablement trempé et revenu, tronçonné, comme indiqué précédemment et en effectuant un martelage sur mandrin interne de forme appropriée, dans une machine permettant un engagement avec rotation axiale du tube, une poussée axiale de l'extrémité étant exercée sur le tube.

Il est bien entendu possible selon l'invention d'effectuer les opérations de refoulement et de rétreint en deux opérations successives, le refoulement étant obtenu par poussée axiale du tube, notamment sur mandrin après chauffage d'une zone correspondante du tube, le rétreint par forgeage ou martelage étant réalisé ensuite après obtention par refoulement de la surépaisseur voulue dans la zone de transition entre le corps et la fusée.

L'opération de recuit, après mise en forme, peut avantageusement être réalisée en effectuant successivement avec des temps relativement courts, un chauffage dans un four à induction à montée rapide en température et une égalisation dans le même four ou dans un autre four, notamment un four électrique à résistance.

Dans le procédé objet de l'invention, on se limite ainsi à effectuer des traitements thermiques localisés aux deux extrémités de l'ébauche d'essieux, c'est-à-dire localisés aux deux fusées et aux deux zones de transitions, ceci sans perturber l'état métallurgique du centre (ou corps) de l'essieu. Le procédé conserve de ce fait les caractéristiques mécaniques données initialement à la partie centrale de l'essieu par le traitement thermique effectué sur l'ébauche à l'état de tube, avant forgeage de fusées.

Le procédé évite d'avoir à effectuer tout traitement métallurgique final de l'essieu dans son ensemble. Il évite, de ce fait, des déformations locales, et la nécessité d'effectuer, comme dans l'art antérieur, un dressage final de l'ensemble de l'ébauche après forgeage de fusées. Ce dressage final est habituellement source de contraintes locales résiduelles très nuisibles.

L'ébauche d'essieu obtenue par la mise en œuvre du procédé selon l'invention se caractérise par une structure métallurgique différente dans le corps et dans les fusées, avec une transition continue de cette structure métallurgique entre le corps et chacune des fusées.

Grâce à la mise en œuvre du procédé selon l'invention, il est possible de réaliser, pour un diamètre donné, des ébauches d'essieux dont l'épaisseur au niveau du corps est inférieure aux épaisseurs susceptibles d'être utilisées pour des propriétés de fonctionnement comparables, dans des ébauches d'essieux normalisées obtenues par des procédés traditionnels. On peut chiffrer cette réduction d'épaisseur de paroi, et donc de poids de l'essieu à environ 13 % vis-à-vis des essieux traditionnels en acier normalisé à propriétés comparables d'usage ou tenue en service.

L'épaisseur de l'ébauche d'essieu obtenue selon l'invention est maximale au niveau de la zone de raccordement cônique entre le corps et chacune des fusées et minimale au niveau du corps, cette épaisseur décroissant depuis la zone de raccordement au corps à l'extrémité extérieure de la fusée, l'épaisseur au niveau de la fusée étant toujours supérieure à l'épaisseur du corps. Le renflement au niveau du raccordement entre le corps et la fusée est supérieur à celui qui serait produit par une variation continue due à un simple rétreint de métal par forgeage ou martelage.

Pour obtenir un essieu, l'ébauche produite par le procédé selon l'invention est ensuite usinée pour former dans les fusées des zones de réception de roulements, et est munie des équipements nécessaires à l'utilisation.

Dans le but de mieux faire comprendre l'invention, on va maintenant décrire, à titre d'exemple en aucune manière limitatif, un mode de réalisation en se référant au dessin annexé dans lequel :

la figure 1 représente une ébauche d'essieu obtenue par mise en œuvre du procédé selon l'invention,

la figure 2 est une vue en coupe agrandie d'une extrémité de l'essieu de la figure 1.

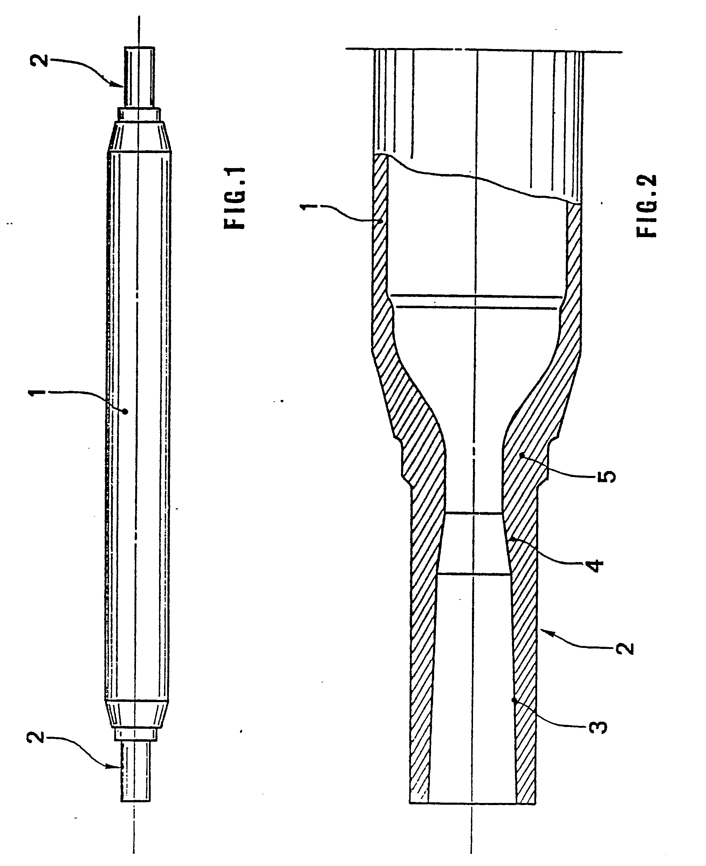

On voit, sur les figures 1 et 2, un essieu comportant un corps 1 muni à ses deux extrémités de fusées 2.

Les fusées 2 présentent une surface de paroi interne cylindrique ou faiblement conique 3.

Entre les fusées et le corps se trouve une zone de transition dans laquelle la paroi intérieure de l'essieu présente une surface tronçonique 3, l'épaisseur de paroi croissant jusqu'à être maximale dans une zone de renflement 4 et 5, cette épaisseur décroissant ensuite jusqu'à atteindre une valeur minimale dans le corps. L'épaisseur de paroi du corps 1 est toujours inférieure à l'épaisseur de paroi 3 dans les fusées 2.

On a ainsi réalisé selon l'invention, dans un acier selon la désignation AFNOR 20MV6 une ébauche d'essieu d'un diamètre standard de 152,4 mm avec une épaisseur de paroi au corps de 10 mm, les épaisseurs minimales susceptibles d'être obtenues par des procédés traditionnels pour le même diamètre dans des aciers normalisés étant de 12 mm. Pour une longueur de l'ébauche d'essieu obtenu de 2 100 mm, le poids est de 82,5 kg, alors que ce poids est, pour une ébauche d'essieu traditionnelle de même diamètre et de propriétés d'usage comparables de 95 kg.

Pour réaliser cet essieu, on a soumis à une trempe à l'eau un tube comme décrit dans le brevet français 79 08 911 (FR-A-24 53 902). Après un revenu du tube, on a procédé à un calibrage dimensionnel suivi d'un dressage.

Le tube a ensuite été tronçonné en longueurs de 2 300 mm.

Pour réaliser les fusées et la zone de transition entre les fusées et le corps, on a chauffé par induction successivement chacune des extrémités du tube tronçonné sur une longueur de l'ordre de 450 mm à une température de l'ordre de 1 200 °C. On a ensuite pour chacune des extrémités procédé à un martelage sur un mandrin interne par engagement avec rotation axiale du tube dans une machine de martelage en exerçant une poussée axiale sur l'extrémité du tube.

L'épaisseur maximale de matière dans la zone de transition, obtenue par refoulement, est de 24,5 mm, l'épaisseur à l'extrémité des fusées étant de 15 mm.

On a alors procédé à un recuit de chacune des fusées en partant de la zone de transition jusqu'à l'extrémité de la fusée dans un four à induction à 950 °C suivi d'un passage dans un four d'égalisation, par exemple un four électrique à résistance dont la zone d'utilisation est comprise entre 900 et 1 000 °C. Ce traitement de finition offre l'avantage de ne pas provoquer de déformation nécessitant un dressage ultérieur, source de contraintes résiduelles.

L'essieu obtenu se caractérise par une limite élastique, dans le corps, supérieure ou égale à 588 N/mm2 et dans les fusées supérieure ou égale à 441 N/mm2.

Il se caractérise également par une résilience à 0° dans le corps supérieure ou égale à 6,5 daJ/cm2 et dans les fusées supérieure ou égale à 5,5 daJ/cm2. L'allongement moyen dans la zone de transition est supérieur ou égale à 20 %.

Bien que l'invention ait été décrite en liaison avec un mode de réalisation particulier, il est bien évident qu'elle n'y est nullement limitée.

### Revendications

1. Procédé de fabrication d'ébauches d'essieux creux en une seule pièce comportant un corps muni de fusées aux deux extrémités, lesdites fusées étant raccordées au corps de chaque côté par une zone de transition, consistant à partir d'un tube en acier type acier de construction trempable, à le chauffer, à le soumettre à une opération de trempe sur toute sa longueur suivie d'un revenu, à effectuer ensuite aux extrémités du tube, après chauffage localisé rapide sans formation de calamine par exemple par induction desdites zones d'extrémités, des opérations de refoulement pour créer une surépaisseur dans la zone de transition entre le corps et la fusée et de rétreint puis à effectuer un traitement thermique localisé de recuit de la zone correspondant aux fusées et à la zone de transition.

2. Procédé selon la revendication 1, caractérisé par le fait qu'on effectue l'opération de trempe sur des tubes en grande longueur et, qu'après avoir effectué un revenu du tube en grande longueur et lui avoir fait subir un calibrage dimensionnel et un dressage, on le tronçonne à la longueur correspondant à celle désirée pour l'ébauche d'essieu.

3. Procédé selon la revendication 1, caractérisé par le fait que l'on effectue l'opération de trempe sur des tubes préalablement tronçonnés à la longueur voulue pour l'ébauche d'essieu.

4. Procédé selon l'une quelconque des revendications précédentes, caractérisé par le fait que les opérations de refoulement et de rétreint sont réalisées en une seule opération sur la zone d'extrémité correspondante en effectuant un martelage sur mandrin interne en exerçant une poussée axiale sur l'extrémité du tube engagé avec rotation axiale.

5. Procédé selon l'une quelconque des revendications 1 à 3, caractérisé par le fait que les opérations de refoulement et de rétreint sont effectuées en deux opérations successives.

6. Procédé selon l'une quelconque des revendications précédentes, caractérisé par le fait que le traitement thermique de recuit est effectué au moins en partie par induction.

7. Procédé selon la revendication 6, caractérisé par le fait que le traitement thermique de recuit comporte une phase de chauffage rapide notamment dans un four à induction et une phase d'égalisation.

8. Procédé selon l'une quelconque des revendications précédentes, selon lequel l'acier du tube de départ est à la fois trempable, en particulier à l'eau, et soudable.

9. Procédé selon la revendication 8, caractérisé par le fait que l'on utilise un tube de départ en acier de qualité 20MV6 selon la désignation AFNOR.

10. Ebauche d'essieu creux en une seule pièce, caractérisée par le fait qu'elle est obtenue par mise en œuvre du procédé selon l'une quelconque des revendications précédentes.

11. Ebauche d'essieu selon la revendication 10, caractérisée par le fait qu'elle présente une épaisseur maximale au niveau de la zone de raccordement entre le corps et chacune des fusées et minimale au niveau du corps, cette épaisseur décroissant depuis la zone de raccordement au corps à l'extrémité extérieure de chaque fusée, l'épaisseur au niveau de la fusée étant supérieure à l'épaisseur du corps.

### Claims

1. A process for producing blanks for hollow axles in one piece comprising a body portion provided with stub axle portions at the two ends, said stub axle portions being connected to the body portion on each side by a transitional region, comprising starting from a tube of steel of quenchable construction steel type, heating it, subjecting it to a quenching operation over the entire length thereof, followed by a tempering operation, then, at the ends of the tube, after rapid localised heating without the formation of scale, for example by induction, of said end regions, effecting an upsetting operation to form an increased thickness in the transitional region between the body portion and the stub axle portion, and a hammering operation, and then effecting a localised thermal annealing treatment on the region corresponding to the stub axle portions and the transitional region.

2. A process according to claim 1 characterised in that the quenching operation is carried out on tubes of great length and that, after the tube of great length has been subjected to a tempering operation and after it has been subjected to a dimensional calibration operation and a truing operation, it is cut to the length corresponding to that required for the axle blank.

3. A process according to claim 1 characterised in that the quenching operation is carried out on tubes which have been previously cut to the required length for the axle blank.

4. A process according to any one of the preceding claims characterised in that the upsetting and hammering operations are carried out in a single operation on the corresponding end region by effecting a hammering process on an internal mandrel while applying an axial thrust force to the end of the tube engaged with axial rotary movement.

5. A process according to any one of claims 1 to 3 characterised in that the upsetting and hammering operations are carried out in two successive operations.

6. A process according to any one of the preceding claims characterised in that the thermal annealing treatment is carried out at least in part by induction.

7. A process according to claim 6 characterised in that the thermal annealing operation includes a rapid heating phase, in particular in an induction furnace, and an equalisation phase.

8. A process according to any one of the preceding claims wherein the steel of the starting tube is both quenchable, in particular with water, and weldable.

9. A process according to claim 8 characterised by using a starting tube of steel of quality 20 MV6 in accordance with the AFNOR designation.

10. A blank for a hollow axle in one piece characterised in that it is produced by carrying out the process according to any one of the preceding claims.

11. An axle blank according to claim 10 characterised in that it has a maximum thickness at the location of the connecting region between the body portion and each of the stub axle portions and a minimum thickness at the location of the body portion, said thickness decreasing from the region of connection to the body to the outward end of each stub axle portion, the thickness at the location of the stub axle portion being greater than the thickness of the body portion.

**Patentansprüche**

1. Verfahren zur Herstellung von hohlen einteiligen Achsrohlingen mit einem an beiden Enden mit Hälsen versehenen Gehäuse, wobei die Hälse auf jeder Seite mit dem Gehäuse durch eine Übergangszone verbunden sind, bestehend darin, ausgehend von einem Rohr aus Stahl der Type härtbarer Baustahl, dieses zu erhitzen, dieses einem Härtevorgang auf seiner gesamten Länge zu unterwerfen, gefolgt von einem Anlassen anschließend an den Enden des Rohrs nach schnellem örtlichen Erhitzen ohne Zunderbildung, z. B. mittels Induktionsheizen dieser Endbereiche ein Anstauchen auszuführen, um eine Überdicke in der Übergangszone zwischen dem Gehäuse und dem Hals und der Einschnürung zu bilden, dann eine örtliche Glühwärmebehandlung der Zone auszuführen, die den Hälsen und der Übergangszone entspricht.

2. Verfahren nach Anspruch 1, gekennzeichnet durch Ausführen des Härtevorgangs an sehr langen Rohren und durch Ablängen des Rohrs auf die Länge, die der für den Achsrohrling gewünschten entspricht, nachdem ein Anlassen des sehr langen Rohrs ausgeführt wurde und an ihm eine Abmessungskalibrierung sowie ein Ausrichten vorgenommen wurden.

3. Verfahren nach Anspruch 1, gekennzeichnet durch Ausführen des Härtevorgangs an Rohren, die vorher auf die für den Achsrohrling gewünschte Länge abgelenkt wurden.

4. Verfahren nach einem der vorhergehenden Ansprüche, dadurch gekennzeichnet, daß die Einschnür- und Anstauchvorgänge in einem einzigen Vorgang dadurch ausgeführt werden, daß die entsprechende Endzone des Rohrs auf einem inneren Dorn gehämmert wird unter Ausübung eines axialen Schubs auf das mit axialer Drehung in Eingriff gebrachte Ende des Rohrs.

5. Verfahren nach einem der Ansprüche 1-3, dadurch gekennzeichnet, daß das Einschnüren und Anstauchen in zwei aufeinanderfolgenden Vorgängen ausgeführt werden.

6. Verfahren nach einem der vorhergehenden Ansprüche, dadurch gekennzeichnet, daß die Glühwärmebehandlung wenigstens teilweise durch Induktion erfolgt.

7. Verfahren nach Anspruch 6, dadurch gekennzeichnet, daß die Glühwärmebehandlung eine Schnellerhitzungsphase, insbesondere in einem Induktionsofen, und eine Ausgleichsphase aufweist.

8. Verfahren nach einem der vorhergehenden Ansprüche, wonach der Stahl des Ausgangsrohrs gleichzeitig, insbesondere in Wasser, härtbar und schweißbar ist.

9. Verfahren nach Anspruch 8, gekennzeichnet durch Verwenden eines Ausgangsrohrs aus Stahl der Qualität 20MV6 gemäß der AFNOR-Bezeichnung.

10. Hohler, einteiliger Achsrohrling, dadurch gekennzeichnet, daß er unter Durchführung des Verfahrens nach einem der vorhergehenden Ansprüche hergestellt ist.

11. Achsrohrling nach Anspruch 10, dadurch gekennzeichnet, daß er an der Verbindungszone zwischen dem Gehäuse und jedem der Hälse eine maximale Dicke und am Gehäuse eine minimale Dicke aufweist, wobei diese Dicke von der Zone der Verbindung mit dem Gehäuse bis zum äußeren Ende jedes Halses abnimmt, wobei die Dicke an jedem Hals größer als die Dicke des Gehäuses ist.

FIG.1

FIG.2

0 056 776